(19) Europäisches Patentamt
European Patent Office
Office européen des brevets

(11) Publication number: **0 227 299**
**A2**

(12) **EUROPEAN PATENT APPLICATION**

(21) Application number: 86309028.8

(51) Int. Cl.4: **B01D 13/04**, B01D 53/22

(22) Date of filing: 19.11.86

(30) Priority: 20.12.85 US 811439

(43) Date of publication of application:
01.07.87 Bulletin 87/27

(84) Designated Contracting States:
CH DE FR GB LI NL SE

(71) Applicant: THE STANDARD OIL COMPANY
200 Public Square, 36-F-3454
Cleveland Ohio 44114-2375(US)

(72) Inventor: Percec, Elena Simona
28110 Belcourt Road
Pepper Pike Ohio 44124(US)

(74) Representative: Smith, Sydney et al
Elkington and Fife High Holborn House 52/54
High Holborn
London WC1V 6SH(GB)

(54) **Polymer/liquid crystal composite semipermeable membranes and process for the use thereof.**

(57) Composite membrane compositions are formed from about 99 to 30 parts by weight of a matrix polymeric chain selected from the group consisting of polyarylenes, substituted polyarylenes, polyesters, polypropylene, polystyrenes, polyvinyl halides and nitrogen containing polymers and, from about 1 to 70 parts by weight of a liquid crystal selected from the group consisting of smectic and cholesteric classes. The composite membrane compositions are novel and have utility as a semipermeable membrane for the separation of gases.

EP 0 227 299 A2

Xerox Copy Centre

# POLYMER/LIQUID CRYSTAL COMPOSITE SEMIPERMEABLE MEMBRANES AND PROCESS FOR THE USE THEREOF

This invention is directed toward novel compositions having utility as semipermeable membranes for liquid or gas separations. The compositions comprise a matrix polymer chain and a liquid crystal material and exhibit improved permselectivity. A process for the use of these compositions as semipermeable membranes for the separation of gas mixtures is also provided.

## BACKGROUND ART

The art is replete with teachings describing various semipermeable membranes, their preparation and use. U.S. Pat. No. 3,350,844 teaches the enrichment of gases by permeation through a thin permeable film or membrane prepared from a polyarylene oxide film. U.S. Pat no. 3,780,496 teaches the use of sulfonated polyxylylene oxide membranes to separate helium, hydrogen and oxygen from gas mixtures.

While the membranes of the above teachings and others all display some level of utility, there exists a continuing search for new membranes and new applications for both new and known membranes. One area for new membranes has been considered recently by the Japanese and appears in several patent applications laid open for public inspection. Application No. 213,407A discloses a membrane composition comprising a nematic liquid crystal and a copolymer of vinyl halide and a copolymerizable monomer. Application No. 213,406A discloses another membrane comprising an organic polymer, a nematic liquid crystal and a selective separation promoting agent. Application No. 210,952A discloses a similar membrane comprising a nematic liquid crystal and a heat resistant high molecular weight polymer. Lastly, Application No. 213,403A also discloses a membrane material comprising a nematic liquid crystal and an organic polymer.

A more detailed description of polymer/liquid crystal membranes appears in an article entitled "Gas Permeation Through Polymer/Liquid Crystal Composite Membrane" Polymer Journal, Vol. 16, No. 4 pp. 307-316 (1984) and describes the preparation, characterization and use of a composite membrane comprising polycarbonate/n-(4-ethoxybenzylidene)-4'-butylaniline. The class of liquid crystal employed is also nematic.

Thus, all of the foregoing publications have been directed toward the use of nematic liquid crystals and have not suggested the use of smectic and cholesteric liquid crystals.

## DISCLOSURE OF THE INVENTION

In general, the composite membrane compositions of the present invention comprise from about 99 to 30 parts by weight of a matrix polymeric chain selected from the group consisting of polyarylenes, substituted polyarylenes, polyesters, polypropylene, polystyrenes, polyvinyl halides and nitrogen containing polymers, and from about 1 to 70 parts by weight of a liquid crystal selected from the group consisting of smectic and cholesteric classes.

The foregoing compositions have utility as semipermeable membranes and the present invention also provides a process for the separation of gases from a mixture containing at least two gases into two fractions, one fraction being enriched with at least one of the gases and the other fraction being depleted in the same. The process is practiced by contacting the gaseous mixture with the semipermeable membrane in such a manner that a portion of the gaseous mixture selectively passes through the membrane resulting in the enriched fraction being on one side of the membrane and the depleted fraction being on the other side of the membrane.

## PREFERRED EMBODIMENT FOR CARRYING OUT THE INVENTION

The membrane compositions of the present invention comprise different types of matrix polymer chains and a liquid crystal material of a smectic or cholesteric class which is selected for its specific phase transition temperature. Owing to the relatively simple manner in which these membrane compositions can be prepared and the wide versatility in selection of the liquid crystal material, many novel and useful membranes can be obtained.

The membranes can be provided in a variety of well known and useful forms including composite or laminate films as well as hollow fibers. While many of the matrix polymer chains have separate utility as membranes, mechanical properties thereof are improved due to the plasticization effects provided by the liquid crystal material. A disclosure of the myriad polymer chains and suitable liquid crystal materials that can be combined is provided hereinbelow.

These membranes display selective separation toward small molecules on the basis of their molecular size and molecular shape. This molecular sieving effect is temperature dependent. At higher temperatures lower selectivity but increased permeability is expected. This behavior suggests that the selective separation with these polymer/liquid crystal membranes is a result of steric discrimination introduced by the molecular arrangement of the mesophase, the regularity of this arrangement being determinative for the permselectivity of the membrane. This is supported by the fact that the optimum selectivity of these membranes is obtained at the lowest possible operating temperature where the maximum, i.e., "lattice" order of the mesophase is reached.

## Selection of the Matrix Polymer

As stated hereinabove, the matrix polymer chain comprises compounds which include the polyarylenes and substituted polyarylenes; polyesters, polypropylene, polystyrenes, polyvinyl halides and nitrogen containing polymers.

The polyarylenes are those polymers defined by the formula

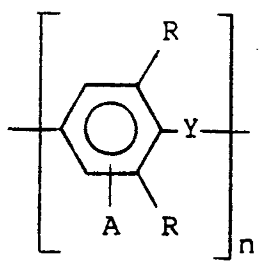

(I)

where each R is independently a $C_1$ to $C_8$ aliphatic or a $C_5$ to $C_7$ cycloaliphatic radical or an aryl radical having the formula

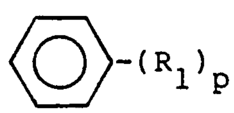

(II)

where each $R_1$ is independently a $C_1$ to $C_8$ aliphatic radical and p is an integer of 0 to 4, each radical being free of a tertiary alpha-carbon atom; A is hydrogen, halogen, an aliphatic or an aryl radical; Y is a divalent oxygen or sulfur atom or a carbonate group and n is an integer of from about 75 to about 10,000.

Substituted polyarylenes are defined by the formula

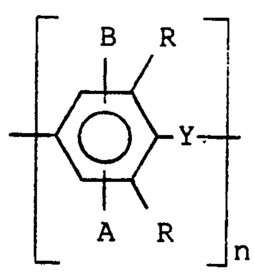

(III)

where R, Y, A and n are the same as above and B is a sulfonyl, sulfonamide, alkyl, acyl or phosphorus group.

As noted above, Y can be divalent oxygen, -O-, divalent sulfur, -S-, or a carbonate group

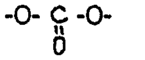

The definition of Y can vary from arylene unit to arylene unit and thus a polymer of formula I can contain all three linkages although perferably the X linkage has the same definition throughout the polymer, i.e., all carbonate, all oxygen or all sulfur. Thus, the foregoing formula encompasses aromatic polyethers, polycarbonates and polysulfones.

Typical groups represented by A in formulae I and II besides hydrogen include halogens, ie., F, Cl, Br and I, the aliphatics described in conjunction with R and aryl radicals such as phenyl, tolyl, xylenyl, phenethyl and the like.

Typical aliphatic groups represented by R in formula I and the foregoing equation include methyl, ethyl, propyl, hexyl, cyclohexyl, cyclohexenyl and the like. Where R is an aryl, as described in formula II, nonpolymeric aryl radicals such as phenyl, tolyl, xylenyl, phenethyl and the like are contemplated. Thus, suitable compounds can be unsubstituted aryl, where p = 0, or alkylaryl or arylalkyl radicals. If desired, R can contain inert substituents, i.e., substituents that are nonreactive with the components of the permeant under separation conditions, although preferably R is free of any such substituents. R is preferably a $C_1$ to $C_4$ alkyl radical and most preferably a methyl radical. $R_1$ in the definition of formula II shares the $C_1$ to $C_8$ aliphatics discussed in conjunction with R hereinabove.

With respect to the groups represented by B in formula III, one is the sulfonyls having the formula

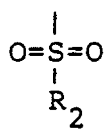 (IV)

where $R_2$ is a $C_1$ to $C_{20}$ aliphatic, an aryl radical of the formula

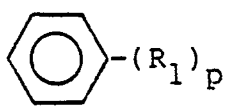 (II)

or a naphthyl radical.

Another group includes the sulfonamides having the formula

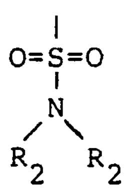 (V)

where $R_2$ can be the same or different.

Another group includes the alkyls having the formula

$R_3$-(VI)

where $R_3$ is a $C_1$ to $C_{20}$ aliphatic radical.

Another group includes the acyls having the formula

$$R_4-\overset{O}{\overset{\|}{C}}- \qquad (VII)$$

where $R_4$ is a $C_1$ to $C_{20}$ aliphatic or an aryl radical of the formula $-(R_1)_p$ (II).

Lastly, phosphorus groups having the formulae

$-P-(R_5)_2$ (VIII)

or

$-\underset{O}{\underset{\|}{P}}-(R_5)_2$ (IX)

can be employed where $R_5$ is $R_4$, $O-R_4$ and mixtures thereof and can be the same or different.

$R_2$ in the definition of formulae IV and V can be any linear or branched hydrocarbon having from one to about 20 carbon atoms including saturated compounds such as methyl, ethyl, propyl, butyl, t-butyl, octyl, hexadecyl and the like, as well as unsaturated, e.g., alkenes, alkynes and the like.

$R_2$ can also be an aryl radical of the formula

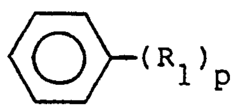

(II)

as noted hereinabove where each $R_1$ is independently a $C_1$ to $C_8$ aliphatic radical, and p is an integer of 0 to 4. If p is a positive integer (greater than 0), preferably it is 1 or 2 and then $R_1$ is preferably a; $C_1$ to $C_3$ alkyl radical.

$R_2$ can thus also be any nonpolymeric aryl radical, such as phenyl, tolyl, xylenyl and phenethyl. By non-polymeric is meant that the aryl radical of an arylene unit of another polymer strand of formula I or in other words, the sulfone group for instance, O=S=O, does not link two independent polymer strands. However, the aryl radical here includes multi-ring compounds such as biphenyl, diphenyloxide, etc. As noted, $R_2$ can also be naphthyl. Preferred aryl radicals are phenyl, tolyl, xylenyl and phenethyl.

$R_3$ in the definition of formula VI shares the $C_1$ to $C_{20}$ aliphatics discussed in conjunction with $R_2$ hereinabove. Similarly, $R_4$ in the definition of formula VII shares both the $C_1$ to $C_{20}$ aliphatics as well as the aryl radicals of formula II, discussed in conjunction with $R_2$ hereinabove. Suitable acylhalides include, for instance, propionyl halide, butyrl chloride, lauroyl chloride, myristoyl chloride, palmitoyl chloride, phenylacetyl chloride, toluoyl chloride and the like.

Suitable sulfonamide halides include compounds such as dimethylsulfamoyl chloride. Suitable phosphorus acid halides include phosphorus trichloride, ethyl chlorophosphite, diphenyl chlorophosphite and the like.

The number of pendant groups B that can be present is at least about five percent, or 0.05 mole, that is, one out of 20 of the polyarylene units will contain a B group. As an upper limit, 200 percent, or 2.0 mole, is possible, that is, every polyarylene unit will contain two groups B. Preferably, 25 to 100 percent (0.25 to 1.0 mole ) will be present, or from one group B per four polyarylene units to one group B per polyarylene unit.

Polyphenylene oxide (PPO), a polyether, is a useful material where both R groups are methyl and the A group is hydrogen. The weight average molecular weight of this material is typically at least about 20,000 and preferably at least about 50,000. The maximum weight average molecular weight is limited only by practical considerations, particularly the film-forming ability of the polymer, but typically it does exceed about 1,000,000 weight average molecular weight. These polymers and their preparation are defined at length in the above-referenced U.S. Pat. No. 3,350,844, the subject matter of which is incorporated herein by reference.

As to the group A, the foregoing polymer can contain another organic group or ring and halogenation can be provided in a conventional modification. It will be understood that the technique by which any of the foregoing groups are incorporated does not constitute a novel aspect of the present invention.

Nevertheless, in order to prepare a polymer having a repeating structural unit of formula III, it is to be noted that a Friedel-Crafts synthesis is employed. The reaction takes place by contacting a solution of polyphenylene oxide, for instance, with sulfonyl halides, sulfamoyl halides, alkyl halides, acyl halides or phosphorus acid halides as desired, e.g., iodides, bromides, chlorides, fluorides in the presence of a Lewis

acid ($AlCl_3$, $SnCl_4$, $FeCl_3$ and the like). Halogenated solvents or polar solvents, particularly nitrobenzene are employed for the reaction. Typical reaction temperatures range between 0° and 100° C; typical reaction times are from a few hours, e.g., about four to 16 hours. Reaction mixtures are usually purged with nitrogen to aid in the removal of hydrogen halide by-products.

Where the substituted polyarylene polymer contains the aryl sulfonyl group B, aryls having the formula

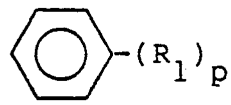

the synthesis of such polymers has been set forth in U.S. Pat. No. 4,427,419, owned by the Assignee of record and was performed by contacting PPO with chlorosulfonic acid and then an aromatic compound such as benzene or toluene. That process is not a Friedel-Crafts technique nor is it useful for synthesizing sulfones containing naphthyl radicals. For naphthyl as well as alkyl moeities, the Friedel-Crafts synthesis process must be employed.

Exemplary aromatic polyarylenes include poly(phenylene oxide); tolylsulfonated poly(phenylene oxide); ring brominated poly(phenylene oxide); polysulfonate; poly(bisphenol A sulfone) and poly (tetramethyl bisphenol A sulfone) ; polycarbonate; poly(bisphenol A carbonate) and poly(tetramethyl bisphenol A carbonate).

As to the nitrogen containing polymers, any of those that can form a semipermeable membrane would be suitable including polyamides, polyimides, polyimines, polyetherimides, polyacrylonitrile, polybenzimidazole, poly(N-vinyl carbazole), polyethylenimine, polyacrylamides, polyvinyl pyrolidine and the like. With respect to the polyvinyl halides, fluorinated polymers with and without chlorine such as poly-(tetrafluoroethylene), fluorinated poly(ethylene propylene), polychlorotrifluoroethylene, hexafluoropropylene, and the like can be employed as well as polyvinyl chloride, polyvinyl fluoride and the like. It is to be understood that the foregoing discussion pertaining to the matrix polymers should be construed as enabling but not necessarily limiting. Those skilled in the art can readily determine suitable polymers based upon the foregoing disclosure.

Selection of the Liquid Crystal

As was stated hereinabove, practice of the present invention differs from previous work which employed the nematic class of liquid crystals. The membrane compositions of this invention require a smectic or chloesteric class liquid crystal which provides greater permeation control of the permeable molecule.

More particularly, the liquid crystals that can be employed include thermotropic liquid crystals of the smectic and cholesteric types. Specific examples of suitable liquid crystals have been set forth in Table I along with their respective mesomorphic range. The examples have been grouped by type as follows: smectic; smectic and cholesteric; cholesteric and, noncholesteric. Although not a part of the present invention, one nematic type appears at the end of the Table for purposes of comparison.

TABLE I

Mesomorphic Liquid Crystals

| | | | |
|---|---|---|---|
| **Smectic compounds** | | | |
| 4-n-pentylbenzylidene-4'-n-hexylaniline | | | |
| Mesomorphic range | Crystal-Smectic | - 2° | C |
| | Smectic-Nematic | 36.2° | C |
| | Nematic-Isotropic | 38.2° | C |
| di-n-heptyl p-azoxy-alpha-methyl cinnamate | | | |
| Mesomorphic range | Crystal-Smectic | 52° | C |
| | Smectic-Isotropic | 90° | C |
| Cholesteryl erucate | | | |
| Mesomorphic range | Crystal-Smectic | 45° | C |
| | Smectic-Isotropic | 50° | C |
| **Smectic and Cholesteric phase compounds** | | | |
| Cholesteryl linoleate | | | |
| Mesomorphic range | Crystal-Smectic | 20° | C |
| | Smectic-Cholesteric | 26° | C |
| | Cholesteric-Isotropic | 35° | C |

Cholesteryl oleate

| | | |
|---|---|---|
| Mesomorphic range | Crystal-Smectic | 33° C |
| | Smectic-Cholesteric | 44° C |
| | Cholesteric-Isotropic | 49° C |

Cholesteryl oleyl carbonate

| | | |
|---|---|---|
| Mesomorphic range | Crystal-Smectic | -10° C |
| | Smectic-Cholesteric | 18° C |
| | Cholesteric-Isotropic | 31° C |

Cholesteryl nonanoate

| | | |
|---|---|---|
| Mesomorphic range | Crystal-Smectic | 78° C |
| | Smectic-Cholesteric | 79° C |
| | Cholesteric-Isotropic | 90° C |

Cholesteryl myristate

| | | |
|---|---|---|
| Mesomorphic range | Crystal-Smectic | 71° C |
| | Smectic-Cholesteric | 79° C |
| | Cholesteric-Isotropic | 83° C |

Cholesteric compounds

Cholesteryl 2-ethoxyethoxy ethyl carbonate

| | | |
|---|---|---|
| Mesomorphic range | Crystal-Cholesteric | - 2° C |
| | Cholesteric-Isotropic | 15° C |

Cholesteryl 2-ethoxyhexanoate

| | | |
|---|---|---|
| Mesomorphic range | | 46-52° C |
| | Cholesteric (Monotropic) | 30° C |

Cholesteryl acetate

| | | |
|---|---|---|
| Mesomorphic range | | 111-113° C |
| | Cholesteric (Monotropic) | 99° C |

Cholesteryl benzoate

| | | |
|---|---|---|
| Mesomorphic range | Crystal-Cholesteric | 148° C |
| | Cholesteric-Isotropic | 176° C |

| | | | |
|---|---|---|---|
| Cholesteryl bromide | | | |
| Mesomorphic range | | 97-98° | C |
| | Cholesteric (Monotropic) | 61° | C |
| Cholesteryl chloride | | | |
| Mesomorphic range | | 95-96° | C |
| | Cholesteric (Monotropic) | 65° | C |
| Cholesteryl palmitate | | | |
| Mesomorphic range | Crystal-Cholesteric | 77° | C |
| | Cholesteric-Isotropic | 83° | C |
| Cholesteryl propionate | | | |
| Mesomorphic range | Crystal-Cholesteric | 97° | C |
| | Cholesteric-Isotropic | 114° | C |

<u>Noncholesteric compound</u>

| | | | |
|---|---|---|---|
| 2-methylbutyl p-(p-methoxybenzylidene amino) cinnamate | | | |
| Mesomorphic range | Crystal-Smectic | 53° | C |
| | Smectic-Cholesteric | 78° | C |
| | Cholesteric-Isotropic | 97° | C |

<u>Nematic compound</u>

| | | | |
|---|---|---|---|
| n-(4-ethoxybenzylidene-4'-n-butylaniline) (EBBA) | | | |
| Mesomorphic range | Crystal-Nematic | 31° | C |
| | Nematic-Isotropic | 60° | C |

The foregoing recitation shall not constitute a limitation of the available liquid crystal materials but merely a disclosure sufficient to those skilled in the art to select a type or one similar thereto from the Table. A more complete recitation of liquid crystal compounds can be found by referring to a suitable textbook such as <u>The Molecular Physics of Liquid Crystals</u>, G. R. Luckhurst and G. W. Gray, Academic Press (1977) or <u>Liquid Crystals and Plastic Crystals</u>, Vols. 1, 2, G. W. Gray and P. A. Winsor, John Wiley and Sons Inc. (1976). The composition range is fairly broad and includes from 99:1 to 30:70 parts by weight of polymer matrix to liquid crystal, respectively.

Semipermeable membranes comprising the novel aromatic polymer synthesized herein can be manufactured by any conventional method. In one embodiment, the polymer matrix and liquid crystal material are dissolved in a suitable solvent to form about a five to about a 20, preferably a seven to about a 15, weight percent solution. Generally any polar solvent can be employed with chloroform, dimethylformamide; dimethylsulfoxide, dimethylacetamide, acetone and methylethyl ketone being examplary. The solution is then poured over a clean glass plate and spread evenly to a uniform thickness with the aid of a doctor blade. The membranes are then air dried, removed from the glass plate and further dried in air under ambient conditions for a suitable period of time, generally in excess of 24 hours. In other embodiments, these membranes can be manufactured by the various laboratory and commercial techniques known in the art. These membranes can also be manufactured in structures other than films, such as hollow fibers.

The membranes of this invention can be cast at any desirable thickness although membranes having a thickness between 25 mils (1 mil equals 25 micrometers) and 100 angstroms, preferably between 1 mil and 100 angstroms. These membranes demonstrate good permeability, durability flexibility, strength and corrosion resistance.

Typical preparations of polymer/liquid crystal compositions of the present invention were conducted as follows:

Membrane 1

0.7 g of poly(phenylene oxide) modified with toluene sulfonyl chloride and 0.3 g of cholesteryl oleyl carbonate were mixed together and dissolved in 13.5 g of chloroform at room temperature. The solution was then poured over a clean glass plate maintained at 25° C and spaced to a uniform thickness with the aid of a doctor blade. The film was dried in the air under ambient conditions and then kept in a vacuum oven at 50° C for 120 hours. The phase transitions were consistent with the following liquid crystal transitions:

Crystal -Smectic -10°C
Smectic -Cholesteric 18° C
Cholesteric -Isotropic 31° C

Membrane 2

1.8 g of poly(bisphenol A sulfone) and 1.2 g of cholesteryl oleyl carbonate were mixed together and dissolved in 40 g of chloroform at room temperature. The solution was then poured over a clean glass plate maintained at 25° C and spread to a uniform thickness with the aid of a doctor blade. The film was also dried in the air under ambient conditions and then kept in a vacuum oven at 40° C for 120 hours. The phase transitions for this membrane were detected by DSC and were consistent with the following liquid crystal transitions:

Crystal -Smectic -10°C
Smectic -Cholesteric 20° C
Cholesteric -Isotropic 35° C
The glass transition temperature of the membrane was recorded at 160°C.

The process of this invention directed toward gas separations is suitable for separating any one of a number of different gases such as hydrogen, helium, nitrogen, oxygen, carbon monoxide, carbon dioxide, hydrogen sulfide, ammonia, water (vapor) and $C_1$ to $C_4$ hydrocarbons from mixtures containing the same. Typical gas mixtures where separation is desirable include $H_2/N_2$; $H_2/CO$; $H_2/C_1$ to $C_4$; $H_2/O_2$; $H_2/NH_3$; $CO_2/C_1$ to C4; $CO_2/N_2$; $H_2S/C_1$ to $C_4$; $O_2/N_2$; $N_2/NH_3$; $N_2/CO$; $He/C_1$ to $C_4$; $H_2S/C_1$ to $C_4$ and $H_2O/C_1$ to $C_4$. The membrane can also be employed for the separation of mixtures comprising three gases or more. It is to be understood that not all gas pairs or mixtures will be separated optimally over a given membrane of the present invention. So long as the membrane exhibits a selectivity for at least one gas in a mixture, it has utility for that particular mixture. The semipermeable membranes of this invention find particular utility for the separation of gaseous carbon dioxide-methane mixtures into their constituent parts, i.e., enriched fractions of carbon dioxide and methane.

These membranes are also useful for separating liquid mixtures, such as ethanol-water, water-aldehyde, salt water, carboxylic acid-water and the like. If used to separate liquid mixtures into their constituent parts, then these membranes are used in the same manner as known membranes for these separations. Furthermore, these membranes can be used in any one of a number of different manners including reverse osmosis and pervaporation, the latter being a combination of permeation and evaporation.

In the work reported in Tables II-VIII, which follow, 12 different polymer/liquid crystal membranes exemplifying the subject invention were employed for the separation of gases, e.g., $CH_4/CO_2$ and $N_2/CH_4$.

Selectivity and permeability data for these gases has been reported in Tables II-VIII. In Tables III-VIII the effect of temperature is also reported. Selectivity, as is known, is a comparison of the permeability, P, of one gas divided by the permeability of the second gas in the mixture. Normally, the less permeable member of the gas pair is placed in the denominator and the selectivity factor will be a number greater than one. Gas permeability constants of polymers are generally expressed by the STP composite unit system according to the following equation:

$$P = \frac{\text{(Amount of gas)(Thickness of membrane)}}{\text{(Membrane area)(Time)(Differential pressure of gas)}}$$

where each member of the equation is expressed in the following units:

$$P = \frac{(cc)(cm)}{(cm^2)(sec)(cmHg)}$$

Permeability as such is reported in Barrers, one Barrer being equal to 1 x $10^{10}$ P. Gas pressures on the membranes of this invention can range from about 0.10 to 200 MPa with five to 100 MPa being preferred.

Apparatus and Procedure:

A modified Gilbert cell was used to test the permeation of the various polymer films reported in Tables II through VIII. The test side in each instance was exposed to a carbon dioxide/methane/nitrogen mixture in a mole ratio of 3.11:33.6:63.29, unless otherwise noted. The permeant was picked up by a carrier gas, helium, and injected intermittently through a sample valve into a GC column for analysis. The experiments were conducted at a range of from 0° to about 70° C, the partial pressure of the test gas on the feed side was 29.7 psi (0.21 MPa) and the partial pressure of the product gas on the permeant side was about 0 and was purged with 29.77 psi (0.21 MPa) helium at a flow rate much in excess of the permeation rate. The area of the test membrane was 45.8 square cm. The film thickness was about 1-2 mils.

TABLE II

Permeability and Selectivity for Polyetherimide/Liquid Crystal Membranes

| Ex. No. | Polyetherimide/ Liquid Crystal (wt/wt) | Liquid Crystal Type | Temp. (°C) | $P_{CO_2}$ | $P_{CH_4}$ | $P_{N_2}$ | $CO_2/CH_4$ Selectivity | $N_2/CH_4$ Selectivity |
|---|---|---|---|---|---|---|---|---|
| 1 | Polyetherimide | - | 0 | 1.66 | 0.0256 | 0.0482 | 65.1 | 1.9 |
| 2 | Polyetherimide/ Cholesteryl Oleyl Carbonate (70/30) | S/Ch[a] | 0 | 2.22 | 0.0272 | 0.0670 | 81.5 | 2.5 |
| 3 | Polyetherimide/ Cholesteryl oleyl Carbonate (60/40) | S/Ch[a] | 0 | 2.5 | 0.0233 | 0.0665 | 71.9 | 2.2 |
| 4 | Polyetherimide/ Cholesteryl 2-(ethoxy ethoxy)ethyl Carbonate (75/25) | Ch[b] | 0 | 1.07 | 0.0139 | 0.0879 | 77.3 | 6.3 |

| Ex. No. | Polyetherimide/ Liquid Crystal (wt/wt) | Liquid Crystal Type | Temp. (°C) | $P_{O_2}$ | $P_{N_2}$ | $O_2/N_2$ Selectivity |
|---|---|---|---|---|---|---|
| 5 | Polyetherimide/ Cholesteryl Oleyl Carbonate (75/25) | S/Ch[a] | 0 | 0.31 | 0.116 | 2.67 |

a) S/Ch = Smectic/Cholesteric

b) Ch = Cholesteric

With respect to the data in Table II, Example No. 1 was a control membrane which contained no liquid crystal component. Selectivities of $CO_2/CH_4$ and $N_2/CH_4$ were significantly improved in Example Nos. 2-4 which contained two different liquid crystal materials in varying amounts. Example No. 5 was employed for separation of an $O_2/N_2$ (21:79) mixture and exhibited good selectivity. Permeability, P, has been reported in barrers.

In Table III the effect of temperature on a polyetherimide/cholesteryl oleyl carbonate membrane (75/25), employed with the $CO_2/CH_4/N_2$ mixtures given above has been reported. Temperatures of the phase transitions for the liquid crystal were consistent with the following liquid crystal transitions:

T° crystal to smectic -10° C

T° smectic to cholesteric 18° C

T° cholesteric to isotropic 31°

## TABLE III

**Permeability Data of Polyetherimide/Cholesteryl Oleyl Carbonate Over a Temperature Range**

| Ex. No. | Temp. (°C) | $P_{CO_2}$ | $P_{CH_4}$ | $P_{N_2}$ | $CO_2/CH_4$ Selectivity | $N_2/CH_4$ Selectivity | $CO_2/N_2$ Selectivity |
|---|---|---|---|---|---|---|---|
| 6 | 0 | 1.60 | 0.0148 | 0.0636 | 108.2 | 4.3 | 25.1 |
| 7 | 10 | 2.34 | 0.0371 | 0.0371 | 62.9 | 2.2 | 28.1 |
| 8 | 15 | 2.36 | 0.0444 | 0.0913 | 53.1 | 2.1 | 25.8 |
| 9 | 20 | 2.63 | 0.0562 | 0.0995 | 46.7 | 1.77 | 26.4 |
| 10 | 25 | 2.78 | 0.0682 | 0.108 | 40.7 | 1.6 | 25.6 |
| 11 | 30 | 2.98 | 0.0849 | 0.120 | 35.1 | 1.4 | 24.8 |
| 12 | 35 | 3.24 | 0.105 | 0.137 | 30.8 | 1.3 | 23.6 |
| 13 | 40 | 3.42 | 0.120 | 0.153 | 28.5 | 1.3 | 22.3 |
| 14 | 45 | 3.43 | 0.123 | 0.168 | 26.6 | 1.3 | 20.4 |
| 15 | 50 | 3.65 | 0.153 | 0.185 | 23.8 | 1.2 | 19.8 |
| 16 | 55 | 3.93 | 0.181 | 0.212 | 21.7 | 1.2 | 18.6 |
| 17 | 60 | 4.34 | 0.218 | 0.248 | 19.9 | 1.1 | 17.6 |

As is evident from Table III, permeability, P, in barrers of all three gases, $CO_2$, $CH_4$ and $N_2$ increased with temperature. Selectivities showed a decreasing trend as the temperature increased.

In Table IV, six more polycarbonate/liquid crystal membranes were employed at various temperatures for the separation of the gas mixture comprising $CO_2/CH_4/N_2$ reported hereinabove. The data has been arranged in six separate sets, each set containing a nematic (N) liquid crystal, characterizing the prior art and a smectic (S) or cholesteric (Ch) liquid crystal for comparison. In each instance, the membrane composition comprised 75 parts of polycarbonate/25 parts of liquid crystal (LC).

## TABLE IV

**Permeability Data for Polycarbonate/Smectic LC, Polycarbonate/Cholesteric LC Polycarbonate/Nematic LC Composite Membranes**

| Set No. | LC | Liquid Crystal Type | Ex. No. | Temp. (°C) | $P_{CO_2}$ Barrer | $P_{CH_4}$ Barrer | $P_{N_2}$ Barrer | $CO_2/CH_4$ Selectivity | $N_2/CH_4$ Selectivity | $CO_2/N_2$ Selectivity |
|---|---|---|---|---|---|---|---|---|---|---|
| I | MBBA[a] | N | 18 | 25 | 2.16 | 0.143 | 0.126 | 15.10 | 0.880 | 17.14 |
| | Cholesteryl Linoleate | S | 19 | 25 | 7.68 | 0.334 | 0.281 | 22.99 | 0.84 | 27.33 |
| II | MBBA[a] | N | 20 | 40 | 4.69 | 0.495 | 0.352 | 9.47 | 0.71 | 13.32 |
| | Cholesteryl Oleate | S | 21 | 40 | 10.3 | 0.657 | 0.457 | 16.7 | 0.70 | 22.53 |
| III | p-Pentylphenyl p-propylbenzoate | N | 22 | 15 | 1.63 | 0.0821 | 0.106 | 19.85 | 1.29 | 15.37 |
| | Cholesteryl Oleyl Carbonate | S | 23 | 15 | 8.60 | 0.255 | 0.277 | 33.72 | 1.08 | 31.04 |
| IV | EBBA[b] | N | 24 | 45 | 2.5 | 0.190 | 0.210 | 13.15 | 1.105 | 11.90 |
| | Cholesteryl Erucate | S | 25 | 45 | 10.6 | 0.672 | 0.485 | 15.7 | 0.72 | 21.8 |

TABLE IV (Continued)

Permeability Data for Polycarbonate/Smectic LC, Polycarbonate/Cholesteric LC

Polycarbonate/Nematic LC Composite Membranes

| Set No. | LC | Liquid Crystal Type | Ex. No. | Temp. (°C) | $P_{CO_2}$ Barrer | $P_{CH_4}$ Barrer | $P_{N_2}$ Barrer | $CO_2/CH_4$ Selectivity | $N_2/CH_4$ Selectivity | $CO_2/N_2$ Selectivity |
|---|---|---|---|---|---|---|---|---|---|---|
| V | MBBA[a] | N | 26 | 30 | 3.67 | 0.354 | 0.261 | 10.36 | 0.737 | 14.06 |
| | Cholesteryl Linoleate | Ch | 27 | 30 | 8.34 | 0.397 | 0.306 | 21.80 | 0.77 | 27.2 |
| | Cholesteryl 2-ethoxy-hexanoate | Ch | 28 | 30 | 6.38 | 0.318 | 0.252 | 20.1 | 0.8 | 25.3 |
| VI | EBBA[b] | N | 29 | 40 | 2.17 | 0.151 | 0.181 | 14.37 | 1.19 | 11.98 |
| | Cholesteryl 2-ethoxy-hexanoate | Ch | 30 | 40 | 6.38 | 0.419 | 0.290 | 15.20 | 0.69 | 22.0 |

a) n-(4-methoxybenzylidene)-4'-n-butylaniline

b) n-(4-ethoxybenzylidene)-4'-n-butylaniline

N = nematic

Ch = cholesteric

S = smectic

As can be determined from Table IV, the polycarbonate/smectic or cholesteric liquid crystal compounds were more permeable to $CO_2$, $CH_4$ and $N_2$ than the polycarbonate/nematic liquid crystal composites. Selectivities in the $CO_2/CH_4$ and $CO_2/N_2$ series were also improved whereas for $N_2/CH_4$ the values were comparable.

In Table V two polycarbonate (PC)/cholesteryl oleyl carbonate (CHOC) membranes were employed for gas separations, one having a 75/25 composition the other having a 60/40 composition. Each was compared with a polycarbonate membrane containing no liquid crystal component. Temperature was also varied between 0° to 40° C in 10° increments. The gas mixture again comprised the $CH_4/CO_2/N_2$ mixture given hereinabove.

**TABLE V**

**Polycarbonate/Cholesteryl Oleyl Carbonate Composite Membrane**

| Ex. No. | Temp. (°C) | $P_{CH_4}$ (Barrer) PC/CHOC 75/25 | $P_{CH_4}$ (Barrer) PC/CHOC 60/40 | $P_{CH_4}$ (Barrer) PC | $P_{CO_2}$ (Barrer) PC/CHOC 75/25 | $P_{CO_2}$ (Barrer) PC/CHOC 60/40 | $P_{CO_2}$ (Barrer) PC | $P_{N_2}$ (Barrer) PC/CHOC 75/25 | $P_{N_2}$ (Barrer) PC/CHOC 60/40 | $P_{N_2}$ (Barrer) PC | $CO_2/CH_4$ Selectivity PC/CHOC 75/25 | $CO_2/CH_4$ Selectivity PC/CHOC 60/40 | $CO_2/CH_4$ Selectivity PC | $N_2/CH_4$ Selectivity PC/CHOC 75/25 | $N_2/CH_4$ Selectivity PC/CHOC 60/40 | $N_2/CH_4$ Selectivity PC |
|---|---|---|---|---|---|---|---|---|---|---|---|---|---|---|---|---|
| 31 | 0 | 0.173 | 0.141 | 0.101 | 7.522 | 6.859 | 4.26 | 0.217 | 0.185 | 0.119 | 43.4 | 48.9 | 42.1 | 1.25 | 1.31 | 1.19 |
| 32 | 10 | 0.200 | 0.210 | 0.209 | 7.734 | 7.954 | 6.54 | 0.211 | 0.251 | 0.185 | 38.6 | 37.9 | 31.1 | 1.05 | 1.19 | 0.88 |
| 33 | 20 | 0.327 | 0.239 | 0.17 | 9.799 | 7.213 | 4.97 | 0.313 | 0.218 | 0.165 | 30.0 | 30.2 | 29.3 | 0.95 | 0.81 | 0.99 |
| 34 | 25 | 0.422 | 0.425 | 0.198 | 11.623 | 11.210 | 5.07 | 0.391 | 0.399 | 0.186 | 27.1 | 26.4 | 25.6 | 0.91 | 0.93 | 0.94 |
| 35 | 30 | 0.543 | 0.524 | 0.236 | 13.598 | 12.630 | 5.43 | 0.473 | 0.542 | 0.208 | 23.9 | 24.1 | 23.0 | 0.88 | 1.03 | 0.88 |
| 36 | 40 | | 0.814 | 0.339 | | 15.690 | 6.3 | | 0.686 | 0.274 | | 19.3 | 18.6 | | 0.84 | 0.81 |

As can be seen from the data in Table V, the membrane compositions of the present invention surpassed polycarbonate alone in all areas and at all temperatures tested.

In Table VI, a polycarbonate/cholesteryl linoleate (CHLA) membrane (75/25) was compared with polycarbonate alone over a temperature range of 0° to 40° C at 10° increments. The gas mixture was again $CH_4/CO_2/N_2$ as hereinabove.

TABLE VI

Polycarbonate/Cholesteryl Linoleate Composite Membrane

| Ex. No. | Temp. (°C) | $P_{CH_4}$ (Barrer) | | $P_{CO_2}$ (Barrer) | | $P_{N_2}$ (Barrer) | | $CO_2/CH_4$ Selectivity | | $N_2/CH_4$ Selectivity | |
|---|---|---|---|---|---|---|---|---|---|---|---|
| | | PC/CHLA | PC | PC/CHLA | PC | PC/CHLA | PC | PC/CHLA | PC | PC/CHLA | PC |
| 37 | 0 | 0.0714 | 0.101 | 3.71 | 4.26 | 0.29 | 0.119 | 52.0 | 42.1 | 1.29 | 1.19 |
| 38 | 10 | 0.116 | 0.209 | 4.45 | 6.54 | 0.13 | 0.185 | 38.7 | 31.3 | 1.17 | 0.88 |
| 39 | 20 | 0.226 | 0.17 | 6.61 | 4.97 | 0.23 | 0.168 | 29.25 | 29.3 | 1.02 | 0.99 |
| 40 | 30 | 0.406 | 0.236 | 8.95 | 5.43 | 0.32 | 0.208 | 22.09 | 23.9 | 0.80 | 0.88 |
| 41 | 40 | 0.632 | 0.339 | 11.0 | 6.3 | 0.44 | 0.274 | 17.9 | 18.6 | 0.69 | 0.81 |

The data indicates that the selectivity was better at 0° C and 10° C when the mesophase was present in the most ordered state. When the operating temperature increased and the order of the mesophase decreased, no significant differences in selectivities were registered. On the contrary, they were slightly lower for the polymer/liquid crystal composite membranes. Meanwhile this had a very clear effect on permeability for both $CO_2$ and $CH_4$ where were much higher above 20° C for polymer/liquid crystal membranes when compared with standard PC.

The same tendency was shown in Table VII, when a membrane comprising polycarbonate/cholesteryl erucate (75/25) was employed for the separation of the $CH_4/CO_2/N_2$ gas mixture between 0° and 35° C in 5° increments.

TABLE VII

Polycarbonate/Cholesteryl Erucate Composite Membrane

| Ex. No. | Temp. (°C) | $P_{CH_4}$ Barrer | $P_{CO_2}$ Barrer | $P_{N_2}$ Barrer | $CO_2/CH_4$ Selectivity | $N_2/CH_4$ Selectivity |
|---|---|---|---|---|---|---|
| 42 | 0 | 0.173 | 7.522 | 0.217 | 43.4 | 1.25 |
| 43 | 5 | 0.178 | 7.619 | 0.262 | 42.9 | 1.15 |
| 44 | 10 | 0.200 | 7.734 | 0.211 | 38.6 | 1.05 |
| 45 | 15 | 0.259 | 8.929 | 0.272 | 34.2 | 1.02 |
| 46 | 20 | 0.327 | 9.799 | 0.313 | 30.0 | 0.95 |
| 47 | 25 | 0.422 | 11.623 | 0.391 | 27.1 | 0.91 |
| 48 | 30 | 0.543 | 13.598 | 0.473 | 23.9 | 0.88 |
| 49 | 35 | 0.645 | 13.740 | 0.552 | 21.3 | 0.85 |

The data in Table VII reflects better permeability as the temperature increased while selectivity decreased. The values reported were all good as compared against polycarbonate alone.

Practice of the process for gas separation can also be conducted with a membrane composition of the present invention applied as a coating to a microporous polymer support. As an example, a polysulfone/cholesteryl oleyl carbonate composition (75/25) and (60/40) applied to Barex 200, a copolymer film comprising acrylonitrile and methylmethacrylate (75/25), was employed with the gas mixture $CH_4/CO_2/N_2$ presented hereinabove. This product is available commercially as Barex resin, Barex being a trademark of Viston Corporation for barrier resins. For comparison, Barex 200 coated with polyetherimide alone was also evaluated. Permeability and selectivity values have been reported in Table VIII and show good utility and improved results over the polymer coated support.

The Barex 200 film was prepared in a manner similar to that for coating the membrane composition of the present invention. Specifically, a 14 percent solution of the resin in dimethylformamide was prepared, poured onto a clean glass plate and spread with a doctor blade. After coagulation with water, subsequent drying and removal, the film was ready to be coated with the membrane composition of the present invention.

## TABLE VIII

**Membrane Compositions as a Coating**

| Ex. No. | Temp. (°C) | $P/l_{CH_4}$ | $P/l_{CO_2}$ | $P/l_{N_2}$ | $N_2/CH_4$ Selectivity | $CO_2/N_2$ Selectivity | $CO_2/CH_4$ Selectivity |
|---|---|---|---|---|---|---|---|
| | | Barex 200 Coated with Polysulfone/Cholesteryl Oleyl Carbonate | | | | | |
| 50[a] | 0 | $8.61\times10^{-10}$ | $444\times10^{-10}$ | $23.9\times10^{-10}$ | 2.8 | 18.6 | 51.6 |
| 51 | 25 | $18.8\times10^{-10}$ | $528\times10^{-10}$ | $92.4\times10^{-10}$ | 4.91 | 5.7 | 28.06 |
| | | Barex 200 Coated with Polysulfone/Cholesteryl Oleyl Carbonate | | | | | |
| 52[b] | 0 | $66.6\times10^{-10}$ | $2860\times10^{-10}$ | $83.3\times10^{-10}$ | 1.2 | 34.3 | 42.9 |
| | | Barex 200 Coated with Polyetherimide and Polyetherimide/Cholesteryl Oleyl Carbonate | | | | | |
| 53 | 0 | $17.5\times10^{-10}$ | $867\times10^{-10}$ | $35.6\times10^{-10}$ | 2.0 | 24.4 | 49.6 |
| 54[c] | 0 | 11.3x10 | $610\times10^{-10}$ | $23.3\times10^{-10}$ | 2.1 | 26.1 | 54.0 |

a) 75/25
b) 60/40
c) 75/25

The permeability coefficient P/1 for the asymmetric membranes was determined and reported. The permeability coefficient per unit thickness for a component X, where X = $CO_2$, $CH_4$ or $N_2$, is expressed in the following unit:

$$P/1 = \frac{cc[STP]}{cm^2 \cdot sec \cdot cmHg}$$

The formula is similar to that for permeability, P, except the thickness of the membrane is not entered.

As the data in Table VIII indicates, coating a porous substrate with a dense film such as the polymer/liquid crystal composite of the present invention gives high selectivity and permeability. The coating exhibits excellent adhesion to the substrate unlike dense film coatings devoid of liquid crystal components which will separate from the substrate over a period of time.

Based upon the foregoing data it is clear that the gas permeation increased at a temperature range corresponding to the primary relaxation process. Evaluation regarding the effect of liquid crystal phase transition temperature and concentration on the selectivity of the membrane has shown that the highest selectivity is reached when the mesophase exists in the most ordered state.

The diffusion of small molecules through mesophases is anisotropic. But the diffusion in nematic mesophases can be considered as a similar process as occurs in liquids exhibiting only some anisotropy. Meanwhile, the behavior of smectics and cholesterics is consistent with the generally accepted assumption that the diffusion process is liquidlike inside the smectic and cholesteric layers, respectively. From plane to plane however it can be regarded as a solidlike jump process with higher activation energy. It has thus been found that the nematic type liquid crystal has the lowest potential in obtaining a membrane with high selectivity.

In conclusion, it should be clear from the fore going data that the polymer matrix/liquid crystal compositions, form improved membranes with smectic and cholesteric class liquid crystals over those employing the nematic class. For use as semipermeable membranes in gas separation processes, best results are obtained when the mesophase exits in the most ordered state.

It is to be understood that the novel polymer matrix/liquid crystal compositions can comprise other components than those exemplified herein, the examples having been provided merely to demonstrate practice of the subject invention. Those skilled in the art may readily select other polymers and liquid crystals of the smectic and cholesteric classes according to the disclosure made hereinabove.

Lastly, although operability of the process to separate $CO_2$ from $CH_4$ and $N_2$ has been demonstrated herein, the membranes of the present invention and process for separating gases therewith can be employed with other gas mixtures so long as the members of a given pair have different permeability rates from each other. Moreover, use of these compositions is not necessarily limited to gas separation as they can also have utility as biological membranes and possibly for the separation of metal ions.

Thus, it is believed that any of the variables disclosed herein can readily be determined and controlled without departing from the spirit of the invention herein disclosed and described. Moreover, the scope of the invention shall include all modifications and variations that fall within the scope of the attached claims.

## Claims

1. Composite membrane compositions comprising:

from about 99 to 30 parts by weight of a matrix polymeric chain selected from the group consisting of polyarylenes, substituted polyarylenes, polyester, polypropylene, polystyrenes, polyvinyl halides and nitrogen containing polymers; and

from about 1 to 70 parts by weight of a liquid crystal selected from the group consisting of smectic and cholesteric classes.

2. Composite membranes, as set forth in claim 1, wherein said polyarylenes have the formula

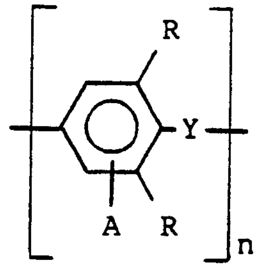

where each R is independently a $C_1$ to $C_8$ aliphatic or a $C_5$ to $C_7$ cycloaliphatic radical or an aryl radical having the formula

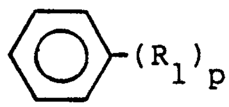

where each $R_1$ is independently a $C_1$ to $C_8$ aliphatic radical and p is an integer of 0 to 4, each radical being free of a tertiary alpha-carbon atom; A is hydrogen, halogen, an aliphatic or an aryl radical; Y is a divalent oxygen or sulfur atom or a carbonate group and n is an integer of from about 75 to about 10,000; and, said substituted polyarylenes have the formula

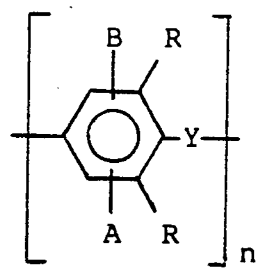

where R, Y, A and n are the same as above and B is a sulfonyl, sulfonamide, alkyl, acyl or phosphorus group.

3. Composite membranes, as set forth in claim 2, wherein said groups B are selected from the group consisting of:
sulfonyls having the formula

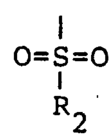

where $R_2$ is a $C_1$ to $C_{20}$ aliphatic, an aryl radical of the formula

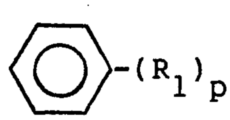

or a naphthyl radical;
sulfonamides having the formula

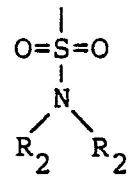

where $R_2$ can be the same or different;
alkyls having the formula
$R_3$-
where $R_3$ is a $C_1$ to $C_{20}$ aliphatic radical;
acyls having the formula

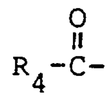

where $R_4$ is a $C_1$ to $C_{20}$ aliphatic or an aryl radical of the formula

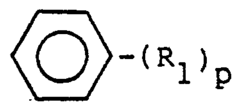

and,
phosphorus groups having the formulae
$-P-(R_5)_2$
or
$-\underset{\underset{O}{\|}}{P}-(R_5)_2$
where $R_5$ is selected from the group consisting of $R_4$, $O-R_4$ and mixtures thereof and can be the same or different.

4. Composite membranes, as set forth in claim 1, wherein said nitrogen containing polymers are selected from the group consisting of polyamides, polyimides, polyimines, polyetherimides, polyacrylonitrile, polybenzimidazole, poly(N-vinyl carbazole), polyacrylamide, polyvinyl pyrolidone and polyethylenimine.

5. Composite membranes, as set forth in claim 2, wherein said liquid crystals are selected from the group consisting of 4-n-pentylbenzylidene-4'-n-hexylaniline; din-heptyl-p-azoxy-alpha-methyl cinnamates; cholesteryl erucate; cholesteric linoleate; cholesteryl oleate; cholesteryl oleyl carbonate; cholesteryl nonanate; cholesteryl myristate; cholesteryl-2-(ethoxyethoxy)-ethyl carbonate; cholesteryl 2-ethoxyhexanoate; cholesteryl acetate; cholesteryl benzoate; cholesteryl bromide; cholesteryl chloride; cholesteryl palmitate; cholesteryl propionate and 2-methylbutyl p-(-p-methoxy-benzylidene amino)cinnamate.

6. Composite membranes, as set forth in claim 1, as semi-permeable membranes useful for the separation of gases from a mixture containing at least two fractions into enriched fractions of each.

7. A process for the separation of gases from a mixture containing at least two gases into two fractions, one fraction being enriched with at least one of said gases and the other fraction being depleted in same, comprising the step of:
contacting the gaseous mixture with a semi-permeable membrane in such a manner that a portion of the gaseous mixture selectively passes through the membrane resulting in the enriched fraction being on one side of the membrane and the depleted fraction being on the other side of the membrane, said semi-permeable membrane having the composition as claimed in any of claims 1 to 5.

8. A process, as set forth in claim 7, wherein the gases in said mixture are selected from the group consisting of hydrogen, helium, oxygen, nitrogen, carbon monoxide, carbon dioxide, hydrogen sulfide, ammonia, water vapor and $C_1$ to $C_4$ hydrocarbons.

9. A process, as set forth in claim 8, wherein said mixture of gases comprises carbon dioxide, methane and nitrogen.

10. A method of making a semi-permeable membrane which comprises dissolving a polymer matrix as defined in claim 1 and a liquid crystal material as defined in claim 1 in a solvent and casting the resulting solution with removal of the solvent.